# EUROPÄISCHE PATENTSCHRIFT

(11) **EP 3 685 117 B1**
(45) Veröffentlichungstag und Bekanntmachung des Hinweises auf die Patenterteilung: **17.11.2021**
(21) Anmeldenummer: 18765609.5
(22) Anmeldetag: 04.09.2018
(51) Int. Cl.: G01B 11/00, G01S 17/46

(54) **VERFAHREN ZUR ERMITTLUNG DER ÖRTLICHEN VERSCHIEBUNG EINES OBJ EKTES**
METHOD FOR DETERMINING THE SPATIAL DISPLACEMENT OF AN OBJECT
PROCÉDÉ PERMETTANT DE DÉTERMINER LE DÉPLACEMENT D'UN OBJET DANS L'ESPACE

(30) Priorität: 19.09.2017 AT 507892017
(43) Veröffentlichungstag der Anmeldung: 29.07.2020
(73) Patentinhaber: Neunteufel, Günther, 3922 Großschönau (AT); Döller, Herbert, 3950 Gmünd (AT)
(72) Erfinder: Neunteufel, Günther, 3922 Großschönau (AT); Döller, Herbert, 3950 Gmünd (AT)
(74) Vertreter: KLIMENT & HENHAPEL
(86) Internationale Anmeldenummer: PCT/EP2018/073719
(87) Internationale Veröffentlichungsnummer: WO 2019/057481

(56) Entgegenhaltungen:
- WO-A2-2006/028512
- GB-A- 2 238 114
- US-A- 4 585 349

## Beschreibung

Die Erfindung betrifft ein Verfahren zur Ermittlung der örtlichen Verschiebung eines Objektes entlang einer Verschiebungsachse, gemäß dem Oberbegriff von Anspruch 1, und eine Messanordnung zur Ermittlung der örtlichen Verschiebung eines Objektes entlang einer Verschiebungsachse, gemäß dem Oberbegriff von Anspruch 8.

Die Messung der örtlichen Verschiebung eines Objektes entlang einer Verschiebungsachse ist beispielsweise im Hoch- und Tiefbau sowie der Überwachung von Infrastruktureinrichtung wesentlich, um eine beginnende Beeinträchtigung der Funktion des Objektes, etwa eines Bauteiles, frühzeitig zu erkennen. Die örtliche Verschiebung entlang einer Verschiebungsachse ist dabei ein wichtiger Indikator etwa einer beginnenden Deformation. Handelt es sich bei dem Objekt beispielsweise um eine Eisenbahnschiene, so lässt eine örtliche Verschiebung in senkrechter Richtung auf eine Rampenbildung zwischen zwei aneinander liegenden Schienen schließen, die bis zur Entgleisung eines Zuges führen kann. Aber auch zur Überwachung instabiler geologischer Zonen beispielsweise kann die Messung der örtlichen Verschiebung von Objekten wesentlich sein, etwa um das Abgleiten größerer Erd- und Gesteinsmassen möglichst frühzeitig erkennen zu können.

Für die Messung der örtlichen Verschiebung eines Objektes entlang einer Verschiebungsachse stehen in herkömmlicher Weise beispielsweise optische Messverfahren zur Verfügung, bei denen ein Laserstrahl auf das vorzugsweise mit einem Reflektor versehene Objekt projiziert wird, und mit einem örtlich auflösenden Detektor, beispielsweise ein CCD-Sensor, ein Vertikalversatz des reflektierten Lichtes gemessen wird. Verfahren dieser Art sind aber ungenau, weil ein Vertikalversatz des reflektierten Lichtes nicht unbedingt auf eine örtliche Verschiebung in senkrechter Richtung zurückzuführen ist, sondern beispielsweise auch auf eine Verdrehung des mit dem Reflektor versehenen Objektes.

Weitere optische Messverfahren werden in der GB 2 238 114 A und der US 4 585 349 beschrieben. In der WO 2006/028512 A2 wird ein optisches Verfahren zur Ermittlung der Distanz zu einem Objekt beschrieben.

Zudem sind örtlich auflösende Detektoren wie beispielsweise CCD-Sensoren gegenüber elektrischen Störfeldern empfindlich und bedürfen permanenter Stromversorgung. Die Messungen müssen aber mitunter in der Präsenz von elektrischen und/oder magnetischen Störfeldern durchgeführt werden, die die Messung bei Verwendung empfindlicher elektronischer Komponenten beeinflussen können. Erhebliche Störfelder sind etwa in der Nähe von Eisenbahnanlagen gegeben, die die Vermessung der Eisenbahnschienen mithilfe optoelektronischer Verfahren erschweren. Zudem ist die Verlegung eigener Stromleitungen zu einem Messort oft weder möglich noch kostenmäßig vertretbar.

Es besteht daher das Ziel der Erfindung darin eine Vorrichtung und ein Verfahren bereitzustellen, die eine genauere Messung der örtlichen Verschiebung von Objekten ermöglichen. Das Verfahren und die hierfür vorgesehene Vorrichtung sollen dabei auch eine Umsetzung erlauben, bei der auf elektrische Komponenten und eine Stromversorgung hierfür verzichtet werden kann, sofern dies in einem konkreten Anwendungsfall erforderlich ist.

Diese Ziele werden durch ein Verfahren gemäß Anspruch 1 und eine Messanordnung gemäß Anspruch 8 erreicht. Anspruch 1 bezieht sich auf ein Verfahren zur Ermittlung der örtlichen Verschiebung eines Objektes entlang einer Verschiebungsachse, bei dem erfindungsgemäß vorgeschlagen wird, dass das von Laserlichtquellen einer Messeinheit erzeugte Licht über einen Lichtwellenleiter zu einem unbewegt gelagerten Messkopf geleitet wird, der das übertragene Licht in Form von zumindest zwei Laserlichtstrahlen mit jeweils unterschiedlichen Wellenlängen mit zumindest zwei entlang der Verschiebungsachse nebeneinander liegenden und einander überlappenden Projektionsflächen auf das Objekt projiziert, und das von einem am Objekt innerhalb der Projektionsflächen befestigten Retroreflektor reflektierte Laserlicht der zumindest zwei Laserlichtstrahlen im Messkopf erfasst wird, wobei die örtliche Verschiebung anhand der Verteilung der reflektierten Lichtstärke über die zumindest zwei Wellenlängen ermittelt wird.

Der Messkopf ist am Ort der Messung in der Nähe des zu vermessenden Objekts unbewegt angeordnet. Er projiziert das von der Messeinheit generierte und über einen Lichtwellenleiter übertragene Laserlicht in Form von zumindest zwei Laserlichtstrahlen mit jeweils unterschiedlichen Wellenlängen auf zumindest zwei entlang der Verschiebungsachse nebeneinander liegende und einander überlappende Projektionsflächen auf das Objekt. Innerhalb dieser Projektionsbereiche ist ein Retroreflektor am Objekt befestigt. Ein Retroreflektor ist ein reflektierendes Material, das die einfallende Strahlung weitgehend unabhängig von der Ausrichtung des Reflektors großteils in Richtung zurück zur Strahlungsquelle reflektiert. Die Lichtstärke des reflektierten Laserlichts hängt somit maßgeblich von der innerhalb der Projektionsflächen des jeweiligen Lichtstrahls liegenden Teilfläche des Retroreflektors ab. Die Messung wird zunächst etwa so eingestellt, dass der Retroreflektor im Überlappungsbereich der beiden Projektionsflächen liegt. Das Verhältnis der reflektierten zur einfallenden Lichtstärke jeder Wellenlänge wird somit für beide Lichtstrahlen unterschiedlicher Wellenlänge etwa gleich groß sein. Aufgrund einer örtlichen Verschiebung des Objektes entlang der Verschiebungsachse kann der am Objekt befestigte Retroreflektor jedoch so verschoben werden, dass er zunehmend außerhalb des Überlappungsbereiches zu liegen kommt, oder den Überlappungsbereich sogar gänzlich verlässt und zur Gänze innerhalb der Projektionsfläche eines der beiden Lichtstrahlen zu liegen kommt. In diesem Fall wird sich die Verteilung der Lichtstärke über die beiden Wellenlängen ändern, bis letztlich von einem der beiden Laserstrahlen überhaupt kein Licht mehr vom Retroreflektor reflektiert wird, und vom anderen Lichtstrahl ein Maximum. Die Verteilung der reflektierten Lichtstärke über die zumindest zwei Wellenlängen ist somit proportional zur örtlichen Verschiebung des Objektes entlang der Verschiebungsachse und kann zur Errechnung der örtlichen Verschiebung verwendet werden, da jede Wellenlänge mit einem örtlichen Projektionsbereich korreliert. Ein Maximum der reflektierten Lichtstärke für eine bestimmte Wellenlänge korreliert somit mit der Positionierung des Retroreflektors innerhalb der entsprechenden Projektionsfläche, und eine fehlende Detektion von reflektiertem Licht einer bestimmten Wellenlänge mit einer Positionierung des Retroreflektors außerhalb der entsprechenden Projektionsfläche. Mit anderen Worten lässt eine Verschiebung des Maximums der reflektierten Lichtstärke von einer Wellenlänge zu einer anderen Wellenläge unmittelbar auf eine entsprechende örtliche Verschiebung des Retroreflektors schließen.

Ein Vorteil des erfindungsgemäßen Verfahrens liegt darin, dass es auch auf eine Weise ausgeführt werden kann, bei der am Ort der Messung ausschließlich stromlose, optische Komponenten verwendet werden, wie noch näher ausgeführt werden wird. In diesem Fall befinden sich stromführende Komponenten ausschließlich in der Messeinheit, die über einen Lichtwellenleiter mit dem Messkopf verbunden ist. Die Messeinheit kann sich aber in weiter Entfernung zum Messkopf befinden, etwa an einem sicheren Ort, an dem eine permanente Stromversorgung über das öffentliche Stromnetz gegeben ist. So kann etwa das vom Retroreflektor reflektierte Laserlicht in einen Lichtwellenleiter eingekoppelt und zur Messeinheit übertragen werden, wobei in einem Spektrometer der Messeinheit die örtliche Verschiebung anhand der Verteilung der reflektierten Lichtstärke über die zumindest zwei Wellenlängen ermittelt wird.

Die Messung kann daher auch automatisiert durchgeführt werden, da sie wartungs- und bedienungsarm ist und insbesondere ohne regelmäßig auszutauschenden Stromspeicher im Messkopf durchgeführt werden kann. Durch Vorgabe von Toleranzwerten der örtlichen Verschiebung des Objektes und einem automatisierten Vergleich der Messwerte mit den Toleranzwerten kann zudem eine automatisierte Generierung eines Warnsignals vorgesehen werden, sobald die Toleranzwerte überschritten werden. Das Messverfahren kann daher weitestgehend autark und ohne menschliche Überwachung durchgeführt werden. Das ermöglicht auch dessen Einsatz über einen längeren Zeitraum an einer Vielzahl an Messstellen, etwa entlang eines Schienenverkehrsnetzes.

Falls am Ort der Messung eine Stromversorgung bereitgestellt werden kann und der Einsatz elektronischer Komponenten kein Problem darstellt, kann das erfindungsgemäße Verfahren freilich ebenfalls angewendet werden. In diesem Fall ist es beispielsweise möglich das vom Retroreflektor reflektierte Licht im Messkopf selbst spektral zu trennen und jede Wellenlänge beispielsweise einer Photodiode zuzuführen, deren der Lichtstärke proportionales, analoges Signal über einen A/D-Wandler in ein digitales Signal umgewandelt und als digitales Signal über den Lichtwellenleiter der Messeinheit übermittelt wird. Zudem ist es auch möglich die für allfällig verwendete elektronische Komponenten benötigte Stromversorgung über die Glasfaser bereit zu stellen ("Power over fiber"), sodass auf eine externe Stromversorgung am Ort der Messung verzichtet werden kann.

Die Anzahl der verwendeten Lichtstrahlen unterschiedlicher Wellenlänge kann freilich variieren. Eine mögliche Ausführung des erfindungsgemäßen Messverfahrens sieht etwa vor, dass das übertragene Licht in Form von fünf Laserlichtstrahlen mit jeweils unterschiedlichen Wellenlängen mit fünf entlang der Verschiebungsachse nebeneinander liegenden Projektionsflächen auf das Objekt projiziert wird, wobei sich benachbarte Projektionsflächen jeweils überlappen. Durch eine Erhöhung dieser Anzahl kann die Genauigkeit der Messung verbessert und der räumliche Messbereich für die örtliche Verschiebung erweitert werden.

Die für die Messung erforderlichen Lichtstrahlen unterschiedlicher Wellenlänge können entweder über jeweils eigene Laser, die in der Messeinheit angeordnet sind, bereit gestellt werden, also bei Verwendung von beispielsweise fünf unterschiedlichen Wellenlängen durch fünf Laser, oder auch durch einen Breitbandlaser. Insbesondere wird vorgeschlagen, dass es sich bei den zumindest zwei Wellenlängen der auf das Objekt projizierten Laserlichtstrahlen um Wellenlängen eines CWDM (Coarse Wavelength Division Multiplex)-Verfahren handelt. Bei einem Multiplexverfahren werden aus verschiedenen Wellenlängen bestehende Lichtsignale üblicher Weise zur Übertragung von Daten über denselben Lichtwellenleiter verwendet. Das CWDM-Verfahren stellt dabei eine Variante eines Multiplexverfahren dar, bei der zur Übertragung von Signalen 18 genormte Wellenlängen mit einem Kanalabstand von 20 nm zwischen 1271 nm und 1611 nm verwendet werden. In der Kommunikationstechnologie werden diese schmalbandigen Wellenlängenbereiche als Übertragungskanäle zur Modulation verwendet. Im Rahmen der vorliegenden Erfindung werden die Lichtsignale unterschiedlicher Wellenlängen jedoch als Messsignale verwendet und sind Teil des Messverfahrens. Insbesondere werden die Lichtsignale unterschiedlicher Wellenlängen nicht moduliert, sondern zur Ermittlung eines Lichtstärkenverhältnisses zwischen dem rückgestrahlten und dem emittierten Licht verwendet. Vorzugsweise handelt es sich bei dem von den Laserlichtquellen der Messeinheit erzeugten Licht um kontinuierliches Laserlicht, wenngleich auch gepulstes Licht verwendet werden kann.

Insbesondere wird vorgeschlagen, dass die zumindest zwei Wellenlängen der auf das Objekt projizierten Laserlichtstrahlen im O-Band und/oder im C-Band und/oder im L-Band des Lichtwellenleiters liegen. Bei Lichtwellenleiter bilden sich durch Streuung und Absorption Wellenlängenbereiche aus, in denen die Dämpfung des übertragenen Lichtsignals geringer ist als in anderen Wellenlängenbereichen. Diese Wellenlängenbereiche werden auch als optische Übertragungsfenster bezeichnet und bevorzugt zur Übertragung von Daten benutzt. Die optischen Fenster liegen in Wellenlängenbereichen um 850 nm, 1.310 nm und 1.550 nm. Das O-Band umfasst etwa einen Wellenlängenbereich von 1260-1360 nm, das C-Band einen Wellenlängenbereich von 1530-1565 nm und das L-Band einen Wellenlängenbereich von 1570-1675 nm. Eine mögliche Wahl von fünf Wellenlängen für die auf das Objekt und den Retroreflektor projizierten Lichtstrahlen wäre etwa 1.530 nm, 1.550 nm, 1.570 nm, 1.590 nm und 1.610nm.

Anspruch 8 bezieht sich auf eine Messanordnung zur Ermittlung der örtlichen Verschiebung eines Objektes entlang einer Verschiebungsachse, für die vorgeschlagen wird, dass ein mit einer Messeinheit über einen Lichtwellenleiter verbundener Messkopf vorgesehen ist, der einen Messkopf-Demultiplexer zur Generierung von zumindest zwei Lichtstrahlen mit jeweils unterschiedlichen Wellenlängen aus dem von Laserlichtquellen der Messeinheit erzeugten und über den Lichtwellenleiter übertragenen Laserlicht umfasst, sowie eine Abstrahl- und Empfangseinheit zur Projektion der zumindest zwei Lichtstrahlen unterschiedlicher Wellenlängen mit entlang der Verschiebungsachse nebeneinander liegenden und einander überlappenden Projektionsflächen auf das Objekt aufweist, und ein am Objekt innerhalb der Projektionsflächen befestigter Retroreflektor vorgesehen ist, wobei eine Auswerteeinheit zur Ermittlung einer örtlichen Verschiebung anhand der Verteilung der reflektierten Lichtstärke über die zumindest zwei Wellenlängen vorgesehen ist.

Vorzugsweise umfasst die Auswerteeinheit ein in der Messeinheit angeordnetes Spektrometer, sowie einen im Messkopf angeordneten Multiplexer zur Einkopplung des vom Retroreflektor reflektierten und mithilfe der Abstrahl- und Empfangseinheit des Messkopfes aufgenommenen Laserlichts unterschiedlicher Wellenlängen in den Lichtwellenleiter. Alternativ ist es auch möglich, dass die Auswerteeinheit ein im Messkopf angeordnetes Spektrometer und einen Detektor zur Ermittlung der Lichtstärke für jede Wellenlänge des vom Retroreflektor reflektierten Laserlichts umfasst, sowie eine im Messkopf angeordnete Schnittstelle zur Einkopplung eines digitalen Signals in den Lichtwellenleiter, das Informationen über die ermittelte Lichtstärke für jede Wellenlänge des vom Retroreflektor reflektierten Laserlichts enthält, und zur Übertragung des digitalen Signals an die Messeinheit. Beim Detektor kann es sich etwa um Photodioden handeln, die das vom Spektrometer getrennte Licht unterschiedlicher Wellenlängen auswerten, wobei die so generierten Analogsignale in ein digitales Signal umgewandelt werden, das in weiterer Folge in den Lichtwellenleiter eingekoppelt wird.

Die Bereitstellung von Licht unterschiedlicher Wellenlängen kann etwa über verschiedene Laserlichtquellen erfolgen, etwa mithilfe von LEDs oder Laserdioden, die jeweils Licht unterschiedlicher Wellenlänge erzeugen, das in weiterer Folge über einen Multiplexer der Messeinheit in den Lichtwellenleiter eingekoppelt wird. Eine mögliche Wahl wären etwa spezielle CWDM-Laserdioden, insbesondere VCSEL-Laser (Vertical Cavity Surface Emitting Laser), die zwar für die Datenübertragung entwickelt wurden, sich für die erfindungsgemäße Anwendung aber als geeignet erwiesen haben. Sie sind für Wellenlängen verfügbar, die sich innerhalb der optischen Übertragungsfenster bei 850 nm, 1.310 nm und 1.550 nm befinden, und weisen eine im Vergleich zu LEDs geringe Strahldivergenz und eine einfache Faser-Einkopplung auf. Alternativ könnte auch ein Breitbandlaser verwendet werden, der die entsprechenden Wellenlängen bereitstellt, wobei in diesem Fall auf einen Multiplexer in der Messeinheit verzichtet werden kann.

Dieses Licht könnte grundsätzlich über unterschiedliche Glasfasern an den Ort der Messung zum Messkopf übertragen werden, wo es für das erfindungsgemäße Verfahren verwendet wird. Das jeweils reflektierte Licht könnte in weitere Glasfasern eingekoppelt und zur Messeinheit übertragen werden, wo es spektrometrisch ausgewertet wird. Diese Vorgangsweise wäre bei ausreichend verfügbarer Glasfaseranzahl grundsätzlich denkbar. Mitunter muss aber auf eine bestehende Glasfaserarchitektur zurückgegriffen werden, sodass auf eine Beschränkung der Zahl der verfügbaren Glasfasern Rücksicht genommen werden muss, insbesondere wenn mehrere Lichtstrahlen unterschiedlicher Wellenlänge übertragen werden müssen. In diesem Fall wird vorzugsweise auf ein Multiplexverfahren zurückgegriffen, indem die Lichtsignale unterschiedlicher Wellenlängen zunächst in der Messeinheit mithilfe eines Multiplexers auf einen Lichtwellenleiter gebündelt und über denselben Lichtwellenleiter übertragen werden, und nach der Übertragung im Messkopf mithilfe eines Demultiplexers durch passive optische Filter getrennt und auf das zu überwachende Objekt sowie den Retroreflektor projiziert werden. Das reflektierte Licht unterschiedlicher Wellenlänge wird vom Messkopf erfasst und entweder mithilfe eines Multiplexers über einen zweiten Lichtwellenleiter zur Messeinheit übertragen, oder bereits im Messkopf ausgewertet. Im erstgenannten Fall wird das empfangene Licht in der Messeinheit einer spektrometrischen Analyse unterzogen, und im zweitgenannten Fall im Messkopf. Dabei wird angemerkt, dass das Multiplexen und das De-Multiplexen apparativ zumeist in derselben Vorrichtungseinheit vorgenommen wird.

Wie bereits erwähnt wurde, werden die Lichtsignale unterschiedlicher Wellenlängen jedoch nicht zur Übertragung von Daten mithilfe von Modulation verwendet, wie es bei CWDM-Verfahren üblich ist, sondern direkt als Messsignale mithilfe von Emission und Reflexion und Vergleich der jeweiligen Lichtstärken.

Die Erfindung wird in weiterer Folge anhand von Ausführungsbeispielen mithilfe der beiliegenden Zeichnungen näher erläutert. Es zeigen hierbei die
Fig. 1 eine schematische Darstellung zur Erläuterung einer Ausführungsform einer erfindungsgemäßen Messanordnung,
Fig. 2 eine schematische Darstellung zur Erläuterung des erfindungsgemäßen Verfahrens, insbesondere der Generierung von Licht unterschiedlicher Wellenlängen mithilfe eines Wellenlängenmultiplexverfahren und dessen Nutzung als Messsignal,
Fig. 3a eine Darstellung der Projektionsflächen bei einer Ausführungsform des erfindungsgemäßen Verfahrens unter Verwendung von fünf unterschiedlichen Wellenlängen,
Fig. 3b eine Prinzipskizze für das im Spektroskop gemessene Messsignal für die Messkonfiguration der Fig. 3a,
Fig. 4a die Messkonfiguration der Fig. 3a bei verschobenem Messobjekt,
Fig. 4b eine Prinzipskizze für das im Spektroskop gemessene Messsignal für die Messkonfiguration der Fig. 4a, und die
Fig. 5 ein Beispiel eines Messergebnisses mithilfe des erfindungsgemäßen Verfahrens unter Verwendung einer erfindungsgemäßen Messanordnung.

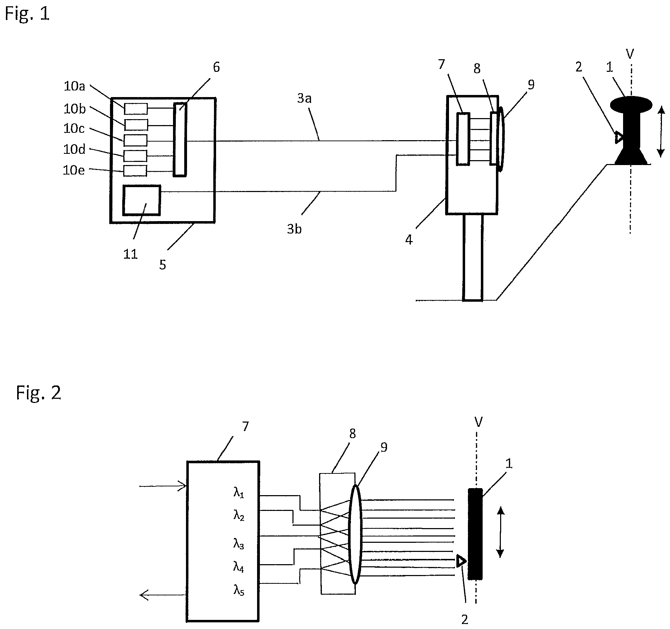

Zunächst wird auf die Fig. 1 Bezug genommen, die eine schematische Darstellung zur Erläuterung einer möglichen Ausführungsform einer entsprechenden Messanordnung zeigt, sowie die Fig. 2, die eine schematische Darstellung zur Erläuterung des erfindungsgemäßen Verfahrens zeigt. Auf der rechten Seite der Fig. 1 ist schematisch ein Objekt 1 dargestellt, dessen örtliche Verschiebung entlang einer Verschiebungsachse V, die in der Fig. 1 und 2 strichpunktiert angedeutet ist, überwacht und gegebenenfalls ermittelt werden soll. Das Objekt 1 kann dabei einer örtlichen Verschiebung in zwei entgegen gesetzten Richtungen entlang der Verschiebungsachse V unterliegen, wie in der Fig. 1 und 2 anhand des Doppelpfeils angedeutet ist. Am Objekt 1 ist hierfür ein Retroreflektor 2 befestigt, der bei einer örtlichen Verschiebung des Objektes 1 entlang der Verschiebungsachse V dieselbe Verschiebung vollzieht. Beim Objekt 1 handelt es sich beispielsweise um eine Eisenbahnschiene.

Die örtliche Verschiebung des Objektes 1 wird anhand der Positionierung eines Retroreflektors 2 innerhalb der einander überlappenden Projektionsbereiche von Laserlichtstrahlen unterschiedlicher Wellenlänge λᵢ (i=1, 2, ... N mit N ≥ 2) ermittelt, wie noch näher erläutert werden wird. In den Fig. 1 bis 5 werden etwa fünf unterschiedliche Wellenlängen λ₁, λ₂, λ₃, λ₄, λ₅ zur Messung verwendet.

Die Bereitstellung des Lichts unterschiedlicher Wellenlängen λ₁, λ₂, λ₃, λ₄, λ₅ erfolgt in Laserlichtquellen 10a, 10b, 10c, 10d und 10e der Messeinheit 5, etwa mithilfe von LEDs oder Laserdioden, die jeweils Licht entsprechender Wellenlängen erzeugen. Eine mögliche Wahl wären etwa spezielle CWDM-Laserdioden, insbesondere VCSEL-Laser, die für Wellenlängen verfügbar sind, die sich innerhalb der optischen Übertragungsfenster von Lichtwellenleitern 3 bei 850 nm, 1.310 nm und 1.550 nm befinden. Bei den fünf Wellenlängen λ₁, λ₂, λ₃, λ₄, λ₅ der auf das Objekt 1 projizierten Laserlichtstrahlen handelt es sich etwa um Wellenlängen eines CWDM-Verfahren, eine mögliche Wahl wäre etwa 1.530 nm, 1.550 nm, 1.570 nm, 1.590 nm und 1.610nm. Diese Wellenlängen liegen im C-Band sowie im L-Band des Lichtwellenleiters 3. Das Laserlicht mit diesen Wellenlängen λ₁, λ₂, λ₃, λ₄, λ₅ kann in weiterer Folge als Messsignal für Entfernungen bis zu 10 km herangezogen werden, wobei es jeweils als kontinuierliches Signal verwendet werden kann, oder auch als gepulstes Signal, dessen mittlere Frequenz im Fourierspektrum der jeweiligen Wellenlänge λ₁, λ₂, λ₃, λ₄, λ₅ entspricht.

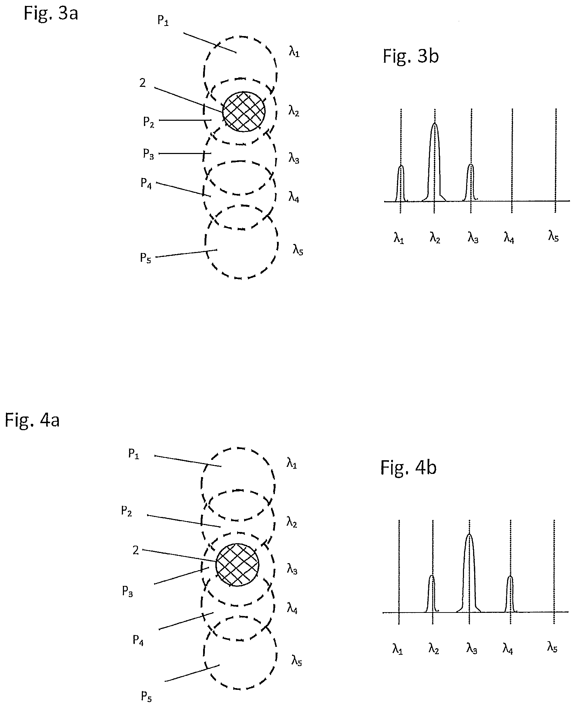

Laserlicht mit diesen Wellenlängen λ₁, λ₂, λ₃, λ₄, λ₅ wird in weiterer Folge mithilfe eines Multiplexverfahrens über einen ersten Lichtwellenleiter 3a dem Messkopf 4 übermittelt, wo es mithilfe eines Demultiplexers in Laserlichtstrahlen mit diesen fünf Wellenlängen λ₁, λ₂, λ₃, λ₄, λ₅ getrennt wird. Für den Übertragungsvorgang von der Messeinheit 5 zum Messkopf 4 ist dabei das Zusammenwirken eines Messeinheit-Multiplexers 6 und eines Messkopf-Demultiplexers 7 erforderlich. Der Messeinheit-Multiplexer 6 koppelt das Laserlicht der fünf Wellenlängen λ₁, λ₂, λ₃, λ₄, λ₅ in denselben Lichtwellenleiter 3a ein, und der Messkopf-Demultiplexer 7 trennt sie wieder auf. Die auf diese Weise dem Messkopf 4 bereit gestellten Messsignale in Form von fünf Laserlichtstrahlen unterschiedlicher Wellenlänge λ₁, λ₂, λ₃, λ₄, λ₅ werden mithilfe einer Abstrahl- und Empfangseinheit 8 des Messkopfes 4 mit entlang der Verschiebungsachse V nebeneinander liegenden und einander überlappenden Projektionsflächen P₁, P₂, P₃, P₄, P₅ auf das Objekt 1 projiziert, wobei die Abstrahl- und Empfangseinheit 8 insbesondere einen Kollimator 9 umfasst. Das sich auf dem Objekt 1 ergebende Projektionsbild ist in den Fig. 3a und 4a schematisch dargestellt.

Innerhalb der Projektionsflächen P₁, P₂, P₃, P₄, P₅ ist der Retroreflektor 2 angeordnet (siehe Fig. 3a und 4a). Das auf das Objekt 1 auftreffende Laserlicht wird im Wesentlichen nur dann vom Messkopf 4 gut messbar reflektiert, wenn es auf den Retroreflektor 2 trifft, der die einfallende Strahlung größtenteils zurück zum Messkopf 4 reflektiert, wo es von der Abstrahl- und Empfangseinheit 8 aufgenommen wird. Das reflektierte Licht wird in weiterer Folge mithilfe eines Messkopf-Multiplexers, der sich in derselben Vorrichtungseinheit wie der Messkopf-Demultiplexer 7 befindet, in einen zweiten Lichtwellenleiter 3b eingekoppelt und zur Messeinheit 5 übertragen, wo es in einem Spektrometer 11 ausgewertet wird. Falls am Ort der Messung eine Stromversorgung bereitgestellt werden kann und der Einsatz elektronischer Komponenten kein Problem darstellt, ist es beispielsweise auch möglich das vom Retroreflektor 2 reflektierte Licht im Messkopf 4 selbst spektral zu trennen und jede Wellenlänge λ₁, λ₂, λ₃, λ₄, λ₅ jeweils einer Photodiode zuzuführen, deren der Lichtstärke proportionale, analoge Signale über einen A/D-Wandler in digitale Signale umgewandelt werden und als digitales Signal über den Lichtwellenleiter 3b der Messeinheit 5 übermittelt wird. In diesem Fall befindet sich das Spektrometer 11 im Messkopf 4 und ein Messkopf-Multiplexer kann entfallen.

Das reflektierte Laserlicht kann mit dem emittierten Laserlicht in seiner Lichtstärke verglichen werden, wobei das Verhältnis auf den innerhalb der betreffenden Projektionsfläche P₁, P₂, P₃, P₄, P₅ liegenden Flächenanteil des Retroreflektors 2 schließen lässt, wie anhand der Fig. 3 und 4 erläutert werden soll. Die Messung wird zunächst gemäß Fig. 3a etwa so eingestellt, dass der Retroreflektor 2 im Überlappungsbereich der beiden Projektionsflächen P₁ und P₂, sowie der Projektionsflächen P₂ und P₃ liegt. Das Verhältnis der reflektierten zur einfallenden Lichtstärke wird somit für die Wellenlänge λ₂ am größten sein, da die gesamte Fläche des Retroreflektors 2 innerhalb der Projektionsfläche P₂ liegt. Das Verhältnis der reflektierten zur einfallenden Lichtstärke für die beiden Lichtstrahlen der Wellenlängen λ₁ und λ₃ wird hingegen in etwa gleich groß sein, da vergleichbare Teilflächen des Retroreflektors 2 innerhalb der Projektionsflächen P₁ und P₃ liegen. Für die Wellenlängen λ₄ und λ₅ wird hingegen kaum oder kein reflektiertes Laserlicht messbar sein, da der Retroreflektor 2 zur Gänze außerhalb der Projektionsflächen P₄ und P₅ liegt, sodass das Verhältnis der reflektierten zur einfallenden Lichtstärke für diese beiden Lichtstrahlen etwa Null sein wird. Diese Verteilung der reflektierten Lichtstärken über die jeweiligen Wellenlängen ist in der Fig. 3b angedeutet.

Aufgrund einer örtlichen Verschiebung des Objektes 1 entlang der Verschiebungsachse V kann der am Objekt 1 befestigte Retroreflektor 2 jedoch so verschoben werden, dass er zunehmend außerhalb des Überlappungsbereiches der beiden Projektionsflächen P₁ und P₂ zu liegen kommt, oder deren Überlappungsbereich sogar gänzlich verlässt und zur Gänze innerhalb der Projektionsfläche P₃ zu liegen kommt, wie in der Fig. 4a dargestellt ist. In diesem Fall wird sich die Verteilung der Lichtstärke über die fünf Wellenlängen λ₁, λ₂, λ₃, λ₄, λ₅ ändern, bis letztlich vom Laserstrahl der Wellenlänge λ₁ überhaupt kein Licht mehr reflektiert wird, vom Laserstrahl der Wellenlänge λ₂ eine gegenüber der Fig. 3b deutlich reduzierte Lichtstärke, und vom Laserstrahl der Wellenlänge λ₃ ein Maximum. Für die Wellenlängen λ₄ und λ₅ wird hingegen wiederum kaum oder kein reflektiertes Laserlicht messbar sein. Die entsprechende Verteilung der reflektierten Lichtstärken über die jeweiligen Wellenlängen ist in der Fig. 4b angedeutet.

Die Verteilung der reflektierten Lichtstärke über die fünf Wellenlängen λ₁, λ₂, λ₃, λ₄, λ₅ ist somit proportional zur örtlichen Verschiebung des Objektes 1 entlang der Verschiebungsachse V und kann zur Errechnung der örtlichen Verschiebung verwendet werden, da jede Wellenlänge λ₁, λ₂, λ₃, λ₄, λ₅ mit einem örtlichen Projektionsbereich korreliert. Ein Maximum der reflektierten Lichtstärke für eine bestimmte Wellenlänge λ₁, λ₂, λ₃, λ₄, λ₅ korreliert somit mit der Positionierung des Retroreflektors 2 innerhalb der entsprechenden Projektionsfläche P₁, P₂, P₃, P₄, P₅, und eine fehlende Detektion von reflektiertem Licht einer bestimmten Wellenlänge λ₁, λ₂, λ₃, λ₄, λ₅ mit einer Positionierung des Retroreflektors 2 außerhalb der entsprechenden Projektionsfläche P₁, P₂, P₃, P₄, P₅. Mit anderen Worten lässt eine Verschiebung des Maximums der reflektierten Lichtstärke von einer Wellenlänge λ₁, λ₂, λ₃, λ₄, λ₅ zu einer anderen Wellenläge λ₁, λ₂, λ₃, λ₄, λ₅ unmittelbar auf eine entsprechende örtliche Verschiebung des Retroreflektors 2 schließen.

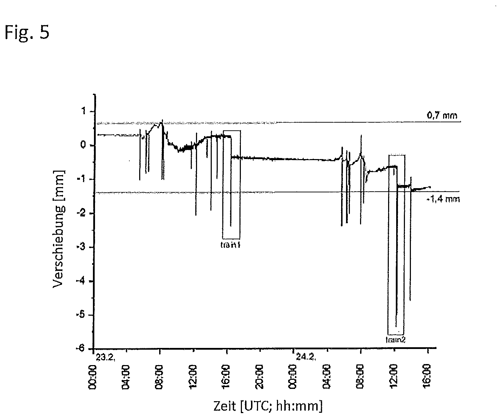

In der Fig. 5 ist eine entsprechende Messkurve dargestellt. Es zeigt sich, dass sich die Messkurve von anfänglich +0.7mm bei der Zeit "00:00h" auf -1.4mm bei der Zeit "16:00" verschiebt, also um 2.1mm. Die beiden mit Umrahmung gekennzeichneten Bereiche "train1" und "train2" zeigen die Passage eines Zuges an, wobei die damit verbundene temporäre Absenkung der Eisenbahnschiene exakt messbar war. Diese temporären Messartefakte können etwa softwaremäßig von einer automatisiert vorgenommenen Überwachung ausgeschieden werden, sodass erst bei einer dauerhaften Überschreitung eines Toleranzbereiches für die örtliche Verschiebung ein Warnsignal generiert wird.

Die Erfindung ermöglicht somit die autarke Messung der örtlichen Verschiebung eines Objektes 1 entlang einer Verschiebungsachse V, die auch ohne lokale Stromversorgung am Ort der Messung einsetzbar ist. Zudem ist die Messung auch ohne Anwesenheit von Bedien- oder Wartungspersonal am Ort der Messung möglich, und erleichtert somit eine permanente Überwachung über längere Zeiträume.

## Patentansprüche

1. Verfahren zur Ermittlung der örtlichen Verschiebung eines Objektes (1) entlang einer Verschiebungsachse (V), **dadurch gekennzeichnet, dass** das von Laserlichtquellen (10) einer Messeinheit (5) erzeugte Licht über einen Lichtwellenleiter (3) zu einem unbewegt gelagerten Messkopf (4) geleitet wird, der das übertragene Licht in Form von zumindest zwei Laserlichtstrahlen mit jeweils unterschiedlichen Wellenlängen λᵢ (i=1, 2, ... N mit N ≥ 2) mit zumindest zwei entlang der Verschiebungsachse (V) nebeneinander liegenden und einander überlappenden Projektionsflächen Pᵢ (i=1, 2, ... N mit N ≥ 2) auf das Objekt (1) projiziert, und das von einem am Objekt (1) innerhalb der Projektionsflächen Pᵢ befestigten Retroreflektor (2) reflektierte Laserlicht der zumindest zwei Laserlichtstrahlen im Messkopf (4) erfasst wird, wobei die örtliche Verschiebung anhand der Verteilung der reflektierten Lichtstärke über die zumindest zwei Wellenlängen λᵢ ermittelt wird.

2. Verfahren nach Anspruch 1, **dadurch gekennzeichnet, dass** das vom Retroreflektor (2) reflektierte Laserlicht in einen Lichtwellenleiter (3) eingekoppelt und zur Messeinheit (5) übertragen wird, wobei in einem Spektrometer (11) der Messeinheit (5) die örtliche Verschiebung anhand der Verteilung der reflektierten Lichtstärke über die zumindest zwei Wellenlängen λᵢ ermittelt wird.

3. Verfahren nach Anspruch 1, **dadurch gekennzeichnet, dass** das vom Retroreflektor (2) reflektierte Licht im Messkopf (4) spektral getrennt und die Lichtstärke einer jeden Wellenlänge λᵢ des vom Retroreflektor (2) reflektierten Laserlichts ermittelt wird, wobei ein digitales Signal, das Informationen über die ermittelte Lichtstärke für jede Wellenlänge λᵢ des vom Retroreflektor (2) reflektierten Laserlichts enthält, über den Lichtwellenleiter (3) der Messeinheit (5) übermittelt wird.

4. Verfahren nach einem der Ansprüche 1 bis 3, **dadurch gekennzeichnet, dass** das übertragene Licht in Form von fünf Laserlichtstrahlen mit jeweils unterschiedlichen Wellenlängen λᵢ (i=1, 2, ... 5) mit fünf entlang der Verschiebungsachse (V) nebeneinander liegenden Projektionsflächen Pᵢ (i=1, 2, ... 5) auf das Objekt (1) projiziert wird, wobei sich benachbarte Projektionsflächen Pᵢ jeweils überlappen.

5. Verfahren nach einem der Ansprüche 1 bis 4, **dadurch gekennzeichnet, dass** es sich bei den zumindest zwei Wellenlängen λᵢ der auf das Objekt (1) projizierten Laserlichtstrahlen um Wellenlängen eines CWDM (Coarse Wavelength Division Multiplex)-Verfahren handelt, die mithilfe eines Multiplexverfahren über den Lichtwellenleiter (3) übertragen werden.

6. Verfahren nach einem der Ansprüche 1 bis 5, **dadurch gekennzeichnet, dass** die zumindest zwei Wellenlängen λᵢ der auf das Objekt (1) projizierten Laserlichtstrahlen im O-Band und/oder im C-Band und/oder im L-Band des Lichtwellenleiters (3) liegen.

7. Verfahren nach einem der Ansprüche 1 bis 6, **dadurch gekennzeichnet, dass** es sich bei dem Objekt (1) um eine Eisenbahnschiene handelt.

8. Messanordnung zur Ermittlung der örtlichen Verschiebung eines Objektes (1) entlang einer Verschiebungsachse (V), **dadurch gekennzeichnet, dass** ein mit einer Messeinheit (5) über einen Lichtwellenleiter (3) verbundener Messkopf (4) vorgesehen ist, der einen Messkopf-Demultiplexer (7) zur Generierung von zumindest zwei Lichtstrahlen mit jeweils unterschiedlichen Wellenlängen λᵢ (i=1, 2, ... N mit N ≥ 2) aus dem von Laserlichtquellen (10) der Messeinheit (5) erzeugten und über den Lichtwellenleiter (3) übertragenen Laserlicht umfasst, sowie eine Abstrahl- und Empfangseinheit (8) zur Projektion der zumindest zwei Lichtstrahlen unterschiedlicher Wellenlängen λᵢ mit entlang der Verschiebungsachse (V) nebeneinander liegenden und einander überlappenden Projektionsflächen Pᵢ (i=1, 2, ... N mit N ≥ 2) auf das Objekt (1) aufweist, und ein am Objekt (1) innerhalb der Projektionsflächen Pᵢ befestigter Retroreflektor (2) vorgesehen ist, wobei eine Auswerteeinheit zur Ermittlung einer örtlichen Verschiebung anhand der Verteilung der reflektierten Lichtstärke über die zumindest zwei Wellenlängen λᵢ vorgesehen ist.

9. Messanordnung nach Anspruch 8, **dadurch gekennzeichnet, dass** die Auswerteeinheit ein in der Messeinheit (5) angeordnetes Spektrometer (11) umfasst, sowie einen im Messkopf (4) angeordneten Messkopf-Multiplexer zur Einkopplung des vom Retroreflektor (2) reflektierten und mithilfe der Abstrahlund Empfangseinheit (8) des Messkopfes (4) aufgenommenen Laserlichts unterschiedlicher Wellenlängen λᵢ in den Lichtwellenleiter (3).

10. Messanordnung nach Anspruch 8, **dadurch gekennzeichnet, dass** die Auswerteeinheit ein im Messkopf (4) angeordnetes Spektrometer (11) und einen Detektor zur Ermittlung der Lichtstärke für jede Wellenlänge λᵢ des vom Retroreflektor (2) reflektierten Laserlichts umfasst, sowie eine im Messkopf (4) angeordnete Schnittstelle zur Einkopplung eines digitalen Signals in den Lichtwellenleiter (3), das Informationen über die ermittelte Lichtstärke für jede Wellenlänge λᵢ des vom Retroreflektor (2) reflektierten Laserlichts enthält, und zur Übertragung des digitalen Signals an die Messeinheit (5).

## Claims

1. Method for determining the local displacement of an object (1) along a displacement axis (V), **characterized in that** the light generated by laser light sources (10) of a measuring unit (5) is guided via an optical waveguide (3) to a fixedly mounted measuring head (4) which transmits the transmitted light in the form of at least two laser light beams, each having different wavelengths λᵢ (i=1, 2, ... N with N ≥ 2) with at least two projection areas Pᵢ (i=1, 2, ... N with N ≥ 2) lying next to one another along the displacement axis (V) and overlapping one another, onto the object (1), and the laser light of the at least two laser light beams reflected by a retroreflector (2) fastened to the object (1) within the projection areas Pᵢ is detected in the measuring head (4), wherein the local displacement is determined on the basis of the distribution of the reflected light intensity over the at least two wavelengths λᵢ.

2. Method according to claim 1, **characterized in that** the laser light reflected by the retroreflector (2) is coupled into an optical waveguide (3) and transmitted to the measuring unit (5), wherein the local displacement is determined in a spectrometer (11) of the measuring unit (5) on the basis of the distribution of the reflected light intensity over the at least two wavelengths λᵢ.

3. Method according to claim 1, **characterized in that** the light reflected by the retroreflector (2) is spectrally separated in the measuring head (4) and the light intensity of each wavelength λᵢ of the laser light reflected by the retroreflector (2) is determined, wherein a digital signal containing information about the determined light intensity for each wavelength λᵢ of the laser light reflected by the retroreflector (2) is transmitted via the optical waveguide (3) of the measuring unit (5).

4. Method according to one of claims 1 to 3, **characterized in that** the transmitted light is projected onto the object (1) in the form of five laser light beams with respectively different wavelengths λᵢ (i=1, 2, ... 5) with five projection areas Pᵢ (i=1, 2, ... 5) lying next to one another along the displacement axis (V), wherein adjacent projection areas Pᵢ overlap in each case.

5. Method according to one of claims 1 to 4, **characterized in that** the at least two wavelengths λᵢ of the laser light beams projected onto the object (1) are wavelengths of a CWDM (Coarse Wavelength Division Multiplex) method, which are transmitted via the optical waveguide (3) with the aid of a multiplex method.

6. Method according to one of claims 1 to 5, **characterized in that** the at least two wavelengths λᵢ of the laser light beams projected onto the object (1) are in the O-band and/or in the C-band and/or in the L-band of the optical waveguide (3).

7. Method according to one of claims 1 to 6, **characterized in that** the object (1) is a railroad rail.

8. Measuring arrangement for determining the local displacement of an object (1) along a displacement axis (V), **characterized in that** a measuring head (4) is provided which is connected to a measuring unit (5) via an optical waveguide (3) and comprises a measuring head demultiplexer (7) for generating at least two light beams with respectively different wavelengths λᵢ (i=1, 2, ... N with N ≥ 2) from the laser light generated by laser light sources (10) of the measuring unit (5) and transmitted via the optical waveguide (3), and a radiating and receiving unit (8) for projecting the at least two light beams of different wavelengths λᵢ with projection areas Pᵢ (i=1, 2, ... N with N ≥ 2) onto the object (1), and a retroreflector (2) fixed to the object (1) within the projection areas Pᵢ is provided, wherein an evaluation unit is provided for determining a local displacement on the basis of the distribution of the reflected light intensity over the at least two wavelengths λᵢ.

9. Measuring arrangement according to claim 8, **characterized in that** the evaluation unit comprises a spectrometer (11) arranged in the measuring unit (5), and a measuring head multiplexer arranged in the measuring head (4) for coupling the laser light of different wavelengths λᵢ reflected by the retroreflector (2) and received with the aid of the radiating and receiving unit (8) of the measuring head (4) into the optical waveguide (3).

10. Measuring arrangement according to claim 8, **characterized in that** the evaluation unit comprises a spectrometer (11) arranged in the measuring head (4) and a detector for determining the light intensity for each wavelength λᵢ of the laser light reflected by the retroreflector (2), as well as an interface arranged in the measuring head (4) for coupling a digital signal into the optical waveguide (3), which contains information about the determined light intensity for each wavelength λᵢ of the laser light reflected by the retroreflector (2), and for transmitting the digital signal to the measuring unit (5).

## Revendications

1. Procédé pour déterminer le déplacement local d'un objet (1) le long d'un axe de déplacement (V), **caractérisé en ce que** la lumière générée par des sources de lumière laser (10) d'une unité de mesure (5) est guidée par un guide d'ondes optiques (3) vers une tête de mesure (4) montée de manière fixe qui projette la lumière transmise sous la forme d'au moins deux faisceaux de lumière laser avec des longueurs d'onde λᵢ (i=1, 2, ... N avec N ≥ 2) chaque fois différentes avec au moins deux surfaces de projection Pᵢ (i=1, 2, ... N avec N ≥ 2) situées l'une à côté de l'autre le long de l'axe de déplacement (V) et se chevauchant l'une l'autre, sur l'objet (1), et la lumière laser desdits au moins deux faisceaux de lumière laser réfléchie par un rétroréflecteur (2) fixé sur l'objet (1) à l'intérieur des surfaces de projection Pᵢ est détectée dans la tête de mesure (4), le déplacement local étant déterminé sur la base de la répartition de l'intensité lumineuse réfléchie sur lesdites au moins deux longueurs d'onde λᵢ.

2. Procédé selon la revendication 1, **caractérisé en ce que** la lumière laser réfléchie par le rétroréflecteur (2) est couplée dans un guide d'ondes optiques (3) et transmise à l'unité de mesure (5), le déplacement local étant déterminé dans un spectromètre (11) de l'unité de mesure (5) sur la base de la répartition de l'intensité lumineuse réfléchie sur lesdites au moins deux longueurs d'onde λᵢ.

3. Procédé selon la revendication 1, **caractérisé en ce que** la lumière réfléchie par le rétroréflecteur (2) est séparée spectralement dans la tête de mesure (4) et l'intensité lumineuse de chaque longueur d'onde λᵢ de la lumière laser réfléchie par le rétroréflecteur (2) est déterminée, un signal numérique qui contient des informations sur l'intensité lumineuse déterminée pour chaque longueur d'onde λᵢ de la lumière laser réfléchie par le rétroréflecteur (2) étant transmis à l'unité de mesure (5) par le guide d'ondes optiques (3).

4. Procédé selon l'une des revendications 1 à 3, **caractérisé en ce que** la lumière transmise est projetée sur l'objet (1) sous la forme de cinq faisceaux de lumière laser de longueurs d'onde chaque fois différentes λᵢ (i=1, 2, ... 5) avec cinq surfaces de projection Pᵢ (i=1, 2, ... 5) situées les unes à côté des autres le long de l'axe de déplacement (V), des surfaces de projection Pᵢ voisines se chevauchant chaque fois.

5. Procédé selon l'une des revendications 1 à 4, **caractérisé en ce que** lesdites au moins deux longueurs d'onde λᵢ des faisceaux de lumière laser projetés sur l'objet (1) sont des longueurs d'onde d'un procédé CWDM (Coarse Wavelength Division Multiplex) qui sont transmises par le guide d'ondes optiques (3) à l'aide d'un procédé de multiplexage.

6. Procédé selon l'une des revendications 1 à 5, **caractérisé en ce que** lesdites au moins deux longueurs d'onde λᵢ des faisceaux de lumière laser projetés sur l'objet (1) se situent dans la bande O et/ou dans la bande C et/ou dans la bande L du guide d'ondes optiques (3).

7. Procédé selon l'une des revendications 1 à 6, **caractérisé en ce que** l'objet (1) est un rail de chemin de fer.

8. Agencement de mesure pour déterminer le déplacement local d'un objet (1) le long d'un axe de déplacement (V), **caractérisé en ce qu'**il est prévu une tête de mesure (4) qui est reliée à une unité de mesure (5) par un guide d'ondes optiques (3) et qui présente un démultiplexeur de tête de mesure (7) pour générer au moins deux faisceaux lumineux avec des longueurs d'onde chaque fois différentes λᵢ (i=1, 2, .... N avec N ≥ 2) à partir de la lumière laser générée par des sources de lumière laser (10) de l'unité de mesure (5) et transmise par le guide d'ondes optiques (3), ainsi qu'une unité d'émission et de réception (8) pour projeter lesdits au moins deux faisceaux lumineux de différentes longueurs d'onde λᵢ avec des surfaces de projection Pᵢ (i=1, 2, ... N avec N ≥ 2) sur l'objet (1), et un rétroréflecteur (2) fixé sur l'objet (1) à l'intérieur des surfaces de projection Pᵢ est prévu, une unité d'évaluation étant prévue pour déterminer un déplacement local sur la base de la répartition de l'intensité lumineuse réfléchie sur lesdites au moins deux longueurs d'onde λᵢ.

9. Agencement de mesure selon la revendication 8, **caractérisé en ce que** l'unité d'évaluation comprend un spectromètre (11) disposé dans l'unité de mesure (5) ainsi qu'un multiplexeur de tête de mesure disposé dans la tête de mesure (4) pour coupler dans le guide d'ondes optiques (3) la lumière laser de différentes longueurs d'onde λᵢ réfléchie par le rétroréflecteur (2) et reçue à l'aide de l'unité d'émission et de réception (8) de la tête de mesure (4).

10. Agencement de mesure selon la revendication 8, **caractérisé en ce que** l'unité d'évaluation comprend un spectromètre (11) disposé dans la tête de mesure (4) et un détecteur pour déterminer l'intensité lumineuse pour chaque longueur d'onde λᵢ de la lumière laser réfléchie par le rétroréflecteur (2), ainsi qu'une interface disposée dans la tête de mesure (4) pour coupler dans le guide d'ondes optiques (3) un signal numérique qui contient des informations sur l'intensité lumineuse déterminée pour chaque longueur d'onde λᵢ de la lumière laser réfléchie par le rétroréflecteur (2), et pour transmettre le signal numérique à l'unité de mesure (5).
